# EUROPÄISCHE PATENTSCHRIFT

(11) **EP 0 518 167 B1**
(45) Veröffentlichungstag und Bekanntmachung des Hinweises auf die Patenterteilung: **11.05.1994**
(21) Anmeldenummer: 92109232.6
(22) Anmeldetag: 02.06.1992
(51) Int. Cl.: A01D 69/00, B60K 17/00

(54) **Fahrzeug**
Vehicle
Véhicule

(30) Priorität: 14.06.1991 US 715175
(43) Veröffentlichungstag der Anmeldung: 16.12.1992
(73) Patentinhaber: DEERE & COMPANY, Moline, Illinois 61265 (US)
(72) Erfinder: Sebben, Daniel Angelo, West Bend, Wisconsin 53095 (US); Patterson, Jon Michael, Wauwatosa, Wisconsin 53226 (US); Hutchison, Wayne Robert, Mayville, Wisconsin 53050 (US)
(74) Vertreter: Feldmann, Bernhard

(56) Entgegenhaltungen:
- FR-A- 2 472 336
- US-A- 4 026 377
- US-A- 4 969 319

## Beschreibung

Die Erfindung bezieht sich auf ein Fahrzeug mit einem querliegenden Endantriebsgehäuse, über das rückwärtige Laufräder antreibbar sind, mit einem Motor, der eine bodenwärts austretende und im wesentlichen vertikal angeordnete Antriebswelle aufweist, und mit einem gegenüber dem Fahrzeug vertikale Relativbewegungen ausführenden und von der Antriebswelle aus über einen Riementrieb antreibbaren Arbeitsgerät.

Bei diesem bekannten Fahrzeug in Form eines Kleinschleppers (US-A-4 969 319, dem Oberbegriff des ersten Anspruch entsprechend) ist heckseitig ein Rasenmäher derartig angeschlossen, daß der Rasenmäher der Bodenkontur folgen kann, d. h. der Rasenmäher verändert mit Bezug auf den ziehenden Kleinschlepper bei auftretenden Bodenunebenheiten ständig seine Lage. Dieser Lageänderung muß der Riementrieb folgen, wodurch sich die Winkellage des Riementriebes ständig ändert. Wird die maximale Winkellage, die vom Riemenhersteller vorgegeben ist, überschritten, dann tritt zunächst zumindest übermäßiger Verschleiß auf mit der Folge, daß der Riemen beschädigt und der Antrieb unterbrochen wird. Je größer der Längenabstand von treibender Riemenscheibe zur getriebenen Riemenscheibe ist, um so größer ist die Höhenkomponente, weshalb jeder Hersteller bemüht ist, einen relativ großen Längenabstand vorzusehen. Dies ist bei den kleinen in der Rasen- und Grundstückspflege einsetzbaren Fahrzeugen oft nicht oder nur mit großen Schwierigkeiten zu bewerkstelligen, da diese Fahrzeuge häufig ein Endgetriebe aufweisen, das eine Kombination aus Differential- und Schaltgetriebe ist. Vielfach ist mit derartigen Getrieben noch der Motor verflanscht. Die treibende Riemenscheibe ist dann relativ hoch vorzusehen und die getriebene Riemenscheibe relativ niedrig, so daß ein Riementrieb sehr schnell seine maximale Winkellage überschreiten kann. Beim gattungsbildenden Dokument ist jedoch eine relativ große Höhenkomponente dadurch erreicht, daß der Riementrieb für den Rasenmäher unterhalb des Endgetriebes verläuft. Allerdings ist hier der Motor vor dem Endgetriebe angeordnet, so daß es bei einem Zwischenachsanbau des Gerätes sehr schnell zu einer Überschreitung der maximalen Winkellage kommen würde, wobei der Motor zusätzlich infolge seines Gewichtes ein relativ großes Moment auf den Fahrzeugrahmen ausübt und dieser deshalb relativ stabil ausgebildet werden muß. Hinzu kommt, daß es aus Wartungszwecken wünschenswert ist, daß Motor und Endgetriebe von einander unabhängige Einheiten bilden.

Die mit der Erfindung zu lösende Aufgabe wird darin gesehen, die Antriebswelle des Motors, die mit dessen Kurbelwelle identisch sein kann, so nahe wie möglich an das Endgetriebe heranzulegen. Diese Aufgabe ist nach der Erfindung gemäß Anspruch 1 dadurch gelöst worden, daß der Motor über dem Endantriebsgehäuse angeordnet ist und das Endantriebsgehäuse in seinem mit Bezug auf die Fahrzeuglängsrichtung vorn liegenden Bereich mit einer Aussparung (36) versehen ist, in der mit der Antriebswelle mittel- oder unmittelbar verbundene Teile einer Antriebsscheibe (24) oder einer Kupplung (34) aufgenommen sind. Auf diese Weise kann die Antriebswelle weit nach hinten verlegt werden und der Motor mit seinem Schwerpunkt fast über das Endgetriebe, so daß auf den Rahmen des Fahrzeuges einwirkende Momente gering sind. Der Rahmen kann daher leichter ausgebildet sein. Durch das Zurückversetzen der Antriebswelle ergibt sich insbesondere für zwischen den Fahrzeugachsen aufgehängte Geräte aber auch für frontseitig aufgehängte Geräte eine ausreichende Riemenlänge mit großen Höhenkomponenten. Da die mit der Antriebswelle verbindbaren Komponenten in Bereiche reichen, die sonst von dem Getriebegehäuse beansprucht werden, kann der Motor mit seinem Schwerpunkt auch tiefer gelegt werden, wodurch die Stabilität des Fahrzeuges verbessert wird. Ein wesentlicher Gesichtspunkt wird auch darin gesehen, daß eine Riemenscheibe auf der Antriebswelle so angeordnet werden kann, daß der Antriebsriemen in der idealen Horizontalebene verläuft.

Ein ausgesparter Bereich läßt sich nach der Erfindung leicht dadurch in das Endantriebsgehäuse integrieren, daß das Endantriebsgehäuse in seinem vorn liegenden Bereich ein außer mittig angeordnetes Differential mit seitlich aus dem Endantriebsgehäuse austretenden Antriebsachsen aufweist und daß der ausgesparte Bereich vor einer der Antriebsachsen und seitlich neben dem Differential vorgesehen ist. Dies gibt der Antriebswelle sogar die Möglichkeit, daß sie mittig vor dem Endantriebsgehäuse vorgesehen werden kann.

Damit die Materialstärke des Endantriebsgehäuses vor der Antriebsachse durch den ausgesparten Bereich nicht zu stark reduziert wird, kann der ausgesparte Bereich zur Antriebswelle konzentrisch ausgebildet sein. Hierdurch ergibt sich ein segmentartiger Ausschnitt.

Nach einem Vorschlag der Erfindung kann in dem vorn liegenden ausgesparten Bereich des Endantriebsgehäuses eine auf der Antriebswelle aufsitzende Antriebsscheibe zumindest teilweise aufgenommen werden. Eine solche Antriebsscheibe wäre über einen Riementrieb mit einer geräteseitigen Riemenscheibe zu verbinden, wobei die Länge der Antriebswelle es zuläßt, die Antriebsscheibe so anzuordnen, daß der Riemen in einer im wesentlichen horizontalen Ebene verläuft.

Von Vorteil kann es sein, daß in dem ausgesparten Bereich des Endantriebsgehäuses eine auf der Antriebswelle angeordnete Kupplung aufgenommen ist, die mit dem Endantriebsgehäuse über Befestigungsmittel lösbar verbunden ist. Hierdurch kann bei laufendem Motor ein Riementrieb abgeschaltet werden, was bei bestimmten Einsatzverhältnissen vorteilhaft sein kann.

Eine weitere erfinderische Maßnahme sieht vor, daß die Antriebsscheibe oberhalb der Kupplung auf der Antriebswelle angeordnet ist, das Kupplungsgehäuse nach Lösen deren Befestigungsmittel auf der Antriebswelle drehbar ist und daß zwischen der Kupplung und dem Endantriebsgehäuse ein das Entfernen des Riemens ermöglichender Spalt vorgesehen ist. Der durch Drehen des Kupplungsgehäuses frei werdende Spalt läßt ein Entfernen aller von der Antriebswelle aus angetrieben Riementriebe zu.

Wenn von dem Motor noch weitere Aggregate aus angetrieben werden sollen, kann oberhalb der Antriebsscheibe eine weitere Riemenscheibe vorgesehen werden.

Zum Ausschalten eines Riementriebes kann die Antriebsscheibe über die Kupplung, die elektrisch betätigbar ist, mit der Antriebswelle drehfest verbindbar sein. Die weitere Riemenscheibe ist dann in der Regel drehfest auf der Antriebswelle montiert.

Wenn die Platzverhältnisse es zulassen, kann die Antriebsscheibe auf der Antriebswelle auch unterhalb der Kupplung vorgesehen sein. Wird eine Kupplung nicht benötigt, so kann in einem solchen Fall die Antriebswelle noch weiter nach rückwärts versetzt angeordnet werden.

Schließlich kann nach der Erfindung auch noch vorgesehen werden, daß rückwärtig des Differentials in dem Endantriebsgehäuse ein Schaltgetriebe vorgesehen ist, das über einen Riementrieb von der Antriebswelle aus antreibbar ist. Motor und Getriebe können dann als getrennte Baueinheiten ausgebildet sein mit dem weiteren Vorteil, daß beide Einheiten im zusammengebauten Zustand mit Bezug auf die Antriebsachsen ausbalanziert sind. Der Fahrzeugrahmen braucht in einem solchen Fall keine oder fast keine Momente aufzunehmen.

In der Zeichnung ist ein nachfolgend näher erläutertes Ausführungsbeispiel der Erfindung dargestellt. Es zeigt:
- Fig. 1: ein mit einem Mähwerk ausgerüstetes Fahrzeug für die Rasenpflege ohne Laufräder, Lenkeinrichtung und Sitz,
- Fig. 2: Riemenantriebe für das Mähwerk und ein Endgetriebe in der Draufsicht,
- Fig. 3: das Endgetriebe im Schnitt und in einer vergrößerten Darstellung,
- Fig. 4: die Zuordnung einer elektrischen Kupplung zu dem Endgetriebe,
- Fig. 5: eine unterhalb der Kupplung vorgesehene Antriebsscheibe für das Mähwerk und
- Fig. 6: eine oberhalb der Kupplung vorgesehene Antriebsscheibe für das Mähwerk.

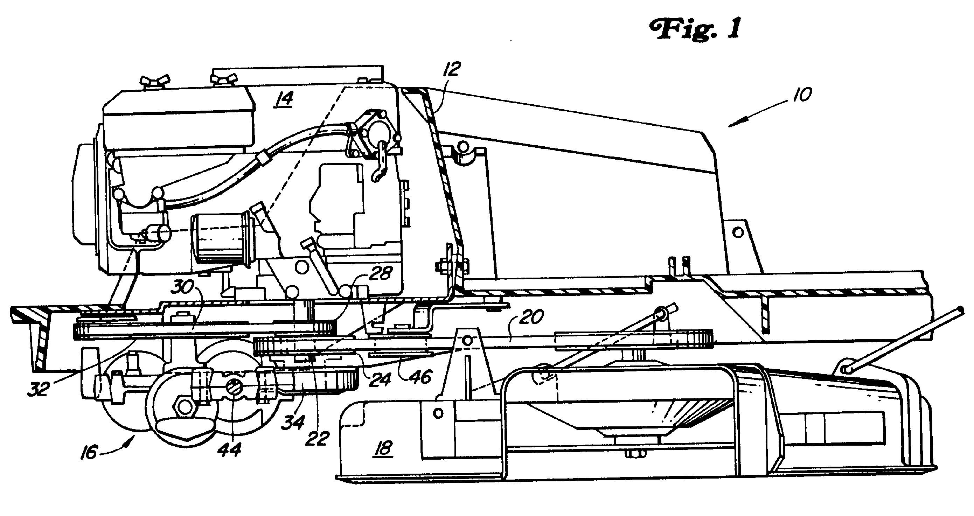

In Fig. 1 der Zeichnung ist ein Fahrzeug 10 für die Rasenpflege teilweise dargestellt. Vordere und rückwärtige Laufräder, eine Lenkeinrichtung sowie ein Sitz sind nicht eingezeichnet. Das Fahrzeug 10 weist einen Rahmen 12, einen am rückwärtigen Ende des Rahmens 12 angeordneten Motor 14, ein Endgetriebe 16 und ein Mähwerksgehäuse 18 mit einem Mähwerk auf. Ein Riemen 20 verbindet eine Antriebswelle 22 des Motors 14 über eine auf der Antriebswelle vorgesehene Antriebsscheibe 24 mit einer getriebenen Riemenscheibe 26, die das Mähwerk antreibt. Auf der Antriebswelle 22 des Motors 14 ist noch eine weitere Riemenscheibe 28 drehfest angeordnet, die ihrerseits über einen zweiten Riemen 30 mit einer Riemenscheibe 32 in Verbindung steht, über die der Kraftfluß vom Motor auf das Endgetriebe 16 übertragbar ist.

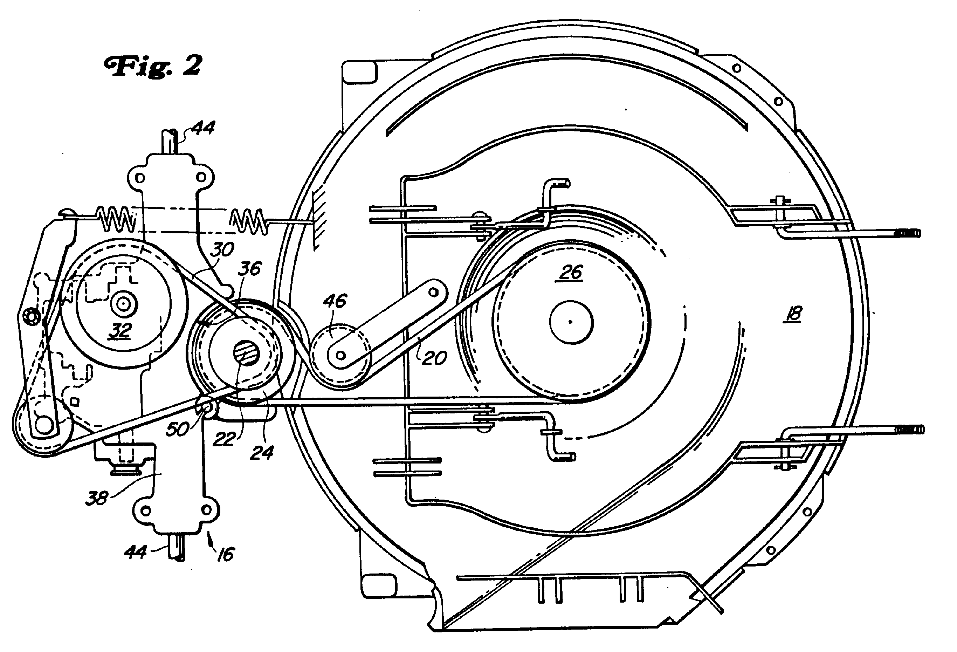

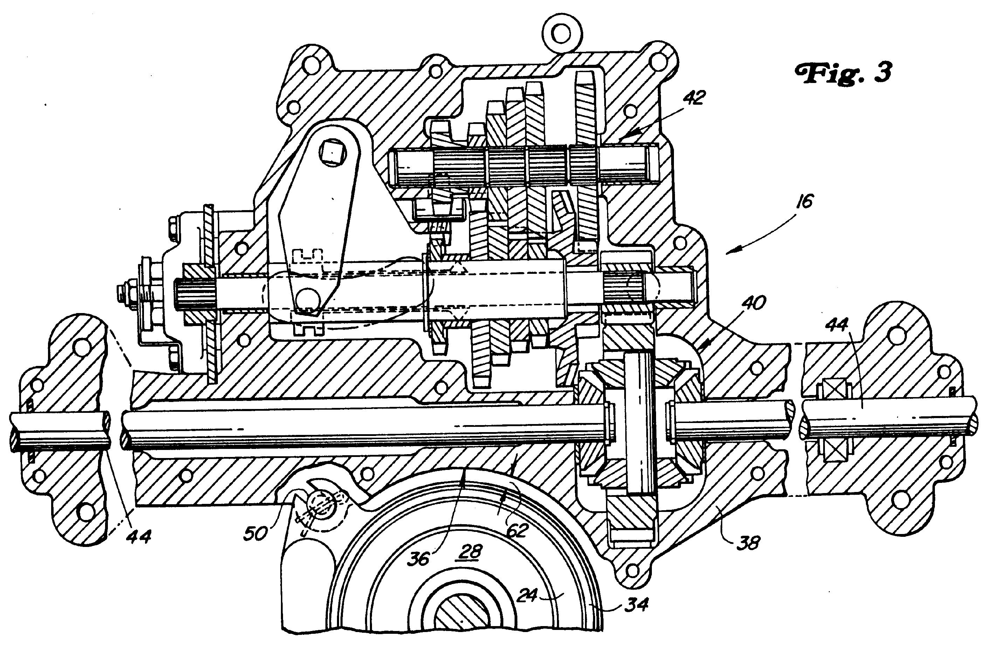

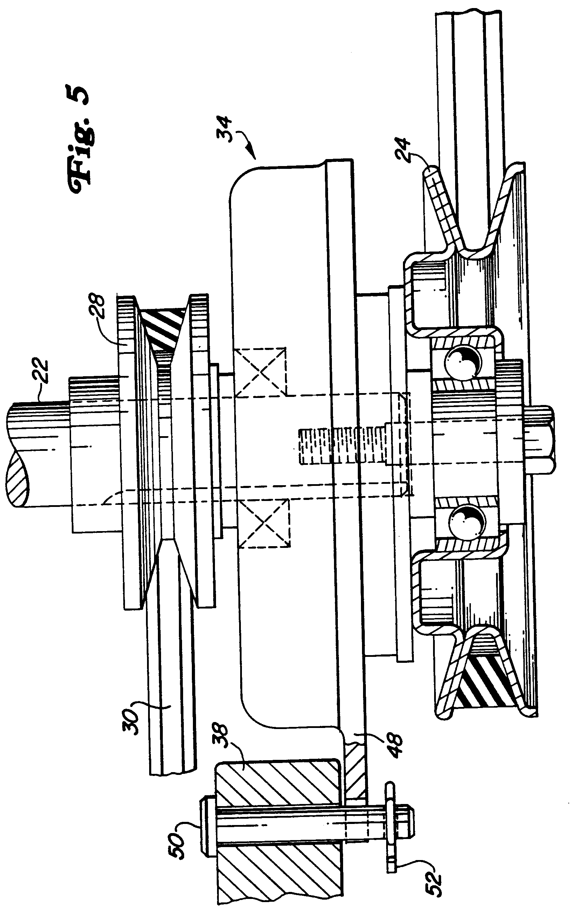

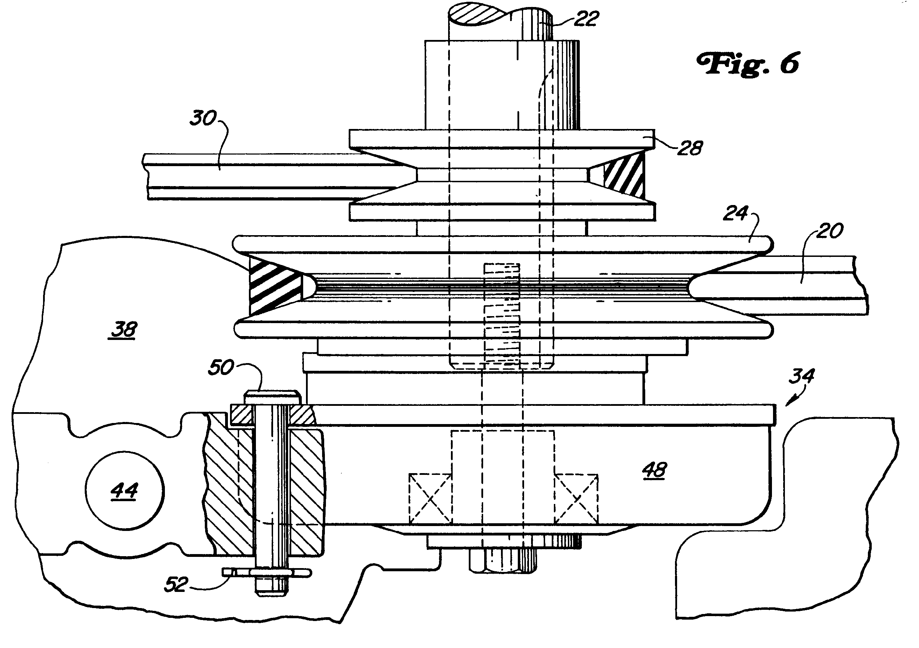

Die Antriebswelle 22 des rückwärtig angeordneten Motors 14 erstreckt sich bodenwärts bzw. nach unten und ist mit einer elektrisch betätigbaren Kupplung 34 bestückt. Diese kann oberhalb der Antriebsscheibe 24, wie es in Fig. 5 angedeutet ist, oder unterhalb der Antriebsscheibe 24, wie es in Fig. 6 dargestellt ist, angeordnet werden. In beiden Fällen ist die Kupplung 34 so nah wie eben möglich an das Endgetriebe 16 herangerückt, das hierzu mit einer Aussparung 36 oder Öffnung versehen ist, was besonders gut aus den Fig. 2 und 3 erkennbar ist. Um dies zu ermöglichen, wurde ein Differential 40 des Endgetriebes 16 seitlich versetzt, so daß sich die Aussparung 36 direkt neben dem Differential 40 im Endantriebsgehäuse 38 befinden kann. Im Endantriebsgehäuse 38, und zwar in dessen rückwärtigen Bereich hinter dem Differential 40, befindet sich noch ein herkömmliches Schaltgetriebe 42, wozu ebenfalls auf die Darstellung in Fig. 3 verwiesen wird. Das Differential 40 ist noch mit je einer rechten und einer linken Antriebsachse 44 versehen, auf der die nicht dargestellten antreibbaren Laufräder des Fahrzeuges aufsitzen.

Dadurch, daß das Differential 40 im Endantriebsgehäuse 38 vorne und nach einer Seite aus der Mitte versetzt angeordnet ist, wurde im vorderen Bereich des Endantriebsgehäuses 38 der Platz für die Antriebsscheibe 24 und / oder die Kupplung 34 geschaffen. Diese Anordnung erlaubt es außerdem, daß der Motor mit seinem Schwerpunkt mehr oder weniger über den Antriebsachsen 44 zu liegen kommt, so daß das Motorgewicht direkt auf die antreibbaren Räder übertragen werden kann und wesentliche Gewichtsanteile nicht in den Fahrzeugaufbau geleitet werden. Hinzu kommt, daß durch diese Anordnung der Motor auch sehr niedrig bzw. in einer unteren Stellung an dem Rahmen 12 angebracht werden kann, wodurch die Stabilität des Fahrzeuges verbessert wird.

Aus Fig. 2 ist zu erkennen, daß der endlose Riemen 20 um die Antriebsscheibe 24 und die getriebene Riemenscheibe 26 gezogen ist und durch eine federbelastete Spannrolle 46 spannbar ist. Der zweite endlose Riemen 30 verbindet die weitere Riemenscheibe 28 auf der Antriebswelle 22 mit der Riemenscheibe 36 am Endgetriebe 16. Auch dieser Riemen wird durch eine federbelastete Spannrolle gespannt, die gleichzeitig die Antriebsverbindung auch unterbrechen kann und somit als Kupplung für das Endgetriebe wirkt.

In den Fig. 5 und 6 ist die Antriebswelle 22 mit ihren Riemenscheiben und der Kupplung 34 in einem vergrößerten Maßstab dargestellt. Dabei ist die Antriebsscheibe 24 einmal oberhalb der Kupplung 34 (Fig. 6) und einmal unterhalb der Kupplung 34 (Fig. 5) eingezeichnet. Hierdurch kann den unterschiedlichen Ausbildungen des Mähwerksgehäuses Rechnung getragen werden, auf dessen Oberseite die getriebene Riemenscheibe 26 auf einer nach oben austretenden Welle aufsitzt.

In Fig. 5 ist lediglich die Kupplung 34 bzw. deren Gehäuse 48 mit ihrem Randbereich in der Aussparung 36 im Endantriebsgehäuse 38 vorgesehen. Das Kupplungsgehäuse 48 ist dabei über Befestigungsmittel mit dem Endantriebsgehäuse lösbar verbunden, wobei zu den Befestigungsmitteln ein Stift 50 und ein Klappstecker 52 gehören. Das Kupplungsgehäuse 48 nimmt eine herkömmliche und elektrisch betätigbare Kupplung 34 auf, über die die Antriebsscheibe 24 wahlweise mit der Antriebswelle 22 drehfest verbindbar ist. Durch die Befestigungsmittel ist das Kupplungsgehäuse stationär angeordnet und je nachdem, ob die Kupplung aktiviert ist oder nicht, läuft die Antriebsscheibe 24 mit der Antriebswelle 22 um oder nicht.

Die weitere auf der Antriebswelle 22 des Motors 14 angeordnete Riemenscheibe 28 ist drehfest auf der Antriebswelle 22 angeordnet und läuft deshalb ständig mit dieser um, wenn der Motor läuft.

Bei der Ausführung nach Fig. 6 ist die Antriebsscheibe 24 oberhalb der Kupplung 34 und damit auf einem höheren Niveau angeordnet. Diese Ausführung wird bevorzugt, wenn die getriebene Riemenscheibe 26 höher angeordnet ist.

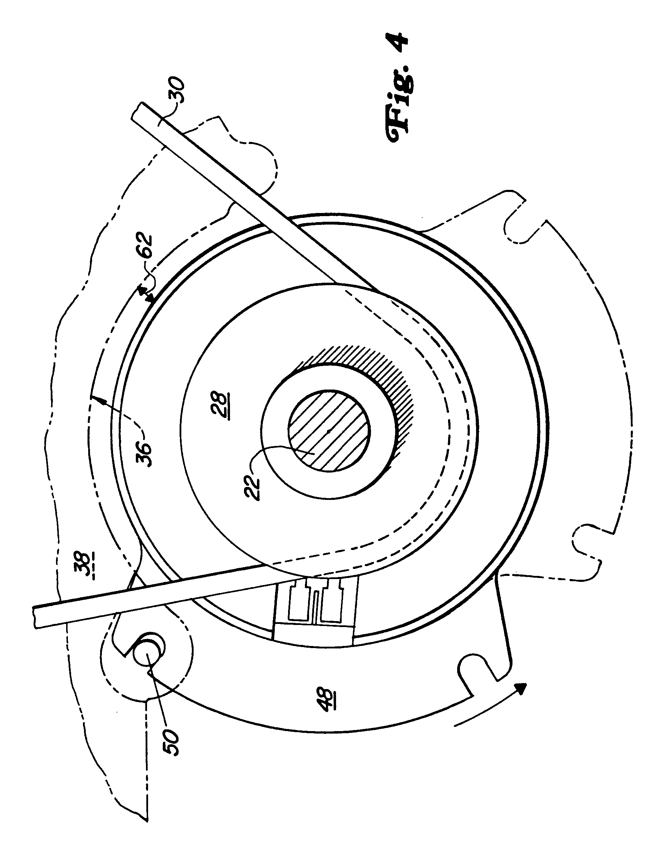

Aus Fig. 4 ist noch zu erkennen, daß sich zwischen dem Endantriebsgehäuse 38 und dem Kupplungsgehäuse 48 ein Ringspalt 62 befindet. Ein solcher Ringspalt befindet sich auch zwischen dem Endantriebsgehäuse und der Antriebsscheibe 24, wenn diese oberhalb der Kupplung 34 angeordnet ist. Der Ringspalt macht ein Entfernen des Riemens 20 und gegebenenfalls auch des Riemens 30 möglich, wenn einer dieser Riemen ersetzt werden muß. Das Kupplungsgehäuse 48 kann zu diesem Zweck aus seiner in Fig. 4 in voll ausgezogenen Linien dargestellten Stellung in die in Fig. 4 in strichpunktierten Linien wiedergegebene Stellung gedreht werden, nachdem der Klappstecker 52 und der Stift 50 entfernt wurden. Die Spannrollen werden in eine Stellung verbracht, in der sie den zu ersetzenden Riemen nicht mehr spannen und der entsprechende Riemen kann von der Antriebswelle 22 durch ein Durchführen durch den Ringspalt gelöst werden. Auf diese Weise ist ein einfaches Ersetzen der Riemen möglich.

## Patentansprüche

1. Fahrzeug mit einem querliegenden Endantriebsgehäuse (38), über das rückwärtige Laufräder antreibbar sind, mit einem Motor (14), der eine bodenwärts austretende und im wesentlichen vertikal angeordnete Antriebswelle (22) aufweist, und mit einem gegenüber dem Fahrzeug (10) vertikale Relativbewegungen ausführenden und von der Antriebswelle (22) aus über einen Riementrieb antreibbaren Arbeitsgerät, dadurch gekennzeichnet daß der Motor (14) über dem Endantriebsgehäuse (38) angeordnet ist und das Endantriebsgehäuse (38) in seinem mit Bezug auf die Fahrzeuglängsrichtung vorn liegenden Bereich mit einer Aussparung (36) versehen ist, in der mit der Antriebswelle (22) mittel- oder unmittelbar verbundene Teile einer Antriebsscheibe (24) oder einer Kupplung (34) aufgenommen sind.

2. Fahrzeug nach Anspruch 1, dadurch gekennzeichnet, daß das Endantriebsgehäuse (38) in seinem vorn liegenden Bereich ein außer mittig angeordnetes Differential (40) mit seitlich aus dem Endantriebsgehäuse austretenden Antriebsachsen (44) aufweist und daß der ausgesparte Bereich (36) vor einer der Antriebsachsen (44) und seitlich neben dem Differential (40) vorgesehen ist.

3. Fahrzeug nach Anspruch 1, dadurch gekennzeichnet, daß der ausgesparte Bereich (36) zur Antriebswelle (22) konzentrisch ausgebildet ist.

4. Fahrzeug nach Anspruch 1, dadurch gekennzeichnet, daß in dem vorn liegenden ausgesparten Bereich (36) des Endantriebsgehäuses (38) eine auf der Antriebswelle (22) aufsitzende Antriebsscheibe (24) zumindest teilweise aufgenommen ist.

5. Fahrzeug nach Anspruch 1, dadurch gekennzeichnet, daß in dem ausgesparten Bereich (36) des Endantriebsgehäuses (38) eine auf der Antriebswelle (22) angeordnete Kupplung (34) aufgenommen ist.

6. Fahrzeug nach Anspruch 5, dadurch gekennzeichnet, daß das Kupplungsgehäuse (48) mit dem Endantriebsgehäuse (38) über Befestigungsmittel lösbar verbunden ist.

7. Fahrzeug nach Anspruch 6, dadurch gekennzeichnet, daß die Antriebsscheibe (24) oberhalb der Kupplung (34) auf der Antriebswelle (22) angeordnet ist, die Kupplung (34) nach Lösen deren Befestigungsmittel auf der Antriebswelle (22) drehbar ist und daß zwischen der Kupplung (34) und dem Endantriebsgehäuse (38) ein das Entfernen des Riemens (20) ermöglichender Spalt (62) vorgesehen ist.

8. Fahrzeug nach einem oder mehreren der vorherigen Ansprüche, dadurch gekennzeichnet, daß oberhalb der Antriebsscheibe (24) eine weitere Riemenscheibe (28) vorgesehen ist.

9. Fahrzeug nach Anspruch 5, dadurch gekennzeichnet, daß die Antriebsscheibe (24) über die Kupplung (34), die elektrisch betätigbar ist, mit der Antriebswelle (22) drehfest verbindbar ist.

10. Fahrzeug nach Anspruch 5, dadurch gekennzeichnet, daß die Antriebsscheibe (24) auf der Antriebswelle (22) unterhalb der Kupplung (34) vorgesehen ist.

11. Fahrzeug nach einem oder mehreren der vorherigen Ansprüche, dadurch gekennzeichnet, daß rückwärtig des Differentials (40) in dem Endantriebsgehäuse (38) ein Schaltgetriebe (42) vorgesehen ist, das über einen Riementrieb (30) von der Antriebswelle (22) aus antreibbar ist.

## Claims

1. Vehicle with a transversely disposed final drive housing (38) via which the rear wheels can be driven, an engine (14) having a driving shaft (22) emerging towards the ground and arranged substantially vertically, and a working implement carrying out vertical relative movements with respect to the vehicle (10) and drivable from the driving shaft (22) by way of a belt drive, characterised in that the engine (14) is arranged above the final drive housing (38) and, in its region located at the front with respect to the longitudinal direction of the vehicle, the final drive housing (38) is provided with a recess (36) in which parts of a driving pulley (24) or of a clutch (34) which are connected directly or indirectly to the driving shaft (22) are accommodated

2. Vehicle according to claim 1, characterised in that in its region located at the front the final drive housing (38) has an eccentrically arranged differential (40) with driving axles (44) emerging laterally from the final drive housing and the recessed zone (36) is provided in front of one of the driving axles (44) and laterally next to the differential (40).

3. Vehicle according to claim 1, characterised in that the recessed zone (36) is formed concentrically with the driving shaft (22).

4. Vehicle according to claim 1, characterised in that a driving pulley (24) mounted on the driving shaft (22) is accommodated at least partially in the recessed zone (36) located at the front of the final drive housing (38).

5. Vehicle according to claim 1, characterised in that a clutch (34) arranged on the driving shaft (22) is accommodated in the recessed zone (36) of the final drive housing (38).

6. Vehicle according to claim 5, characterised in that the clutch housing (48) is releasably connected to the final drive housing (38) through the medium of fixing means.

7. Vehicle according to claim 6, characterised in that the driving pulley (24) is arranged on the driving shaft (22) above the clutch (34), the clutch (34) is rotatable on the driving shaft (22) after release of its fixing means and a gap (62) making removal of the belt (20) possiblE is provided between the clutch (34) and the final drive housing (38).

8. Vehicle according to one or more of the preceding claims, characterised in that another belt pulley (28) is provided above the driving pulley (24).

9. Vehicle according to claim 5, characterised in that the driving pulley (24) is connectable with the driving shaft (22) to be fast in rotation therewith via the clutch (34, which is electrically operated.

10. Vehicle according to claim 5, characterised in that the driving pulley (24) is provided on the driving shaft (22) below the clutch (34).

11. Vehicle according to one or more of the preceding claims, characterised in that a change-speed gear (42) which can be driven from the driving shaft (22) via a belt drive (30) is provided to the rear of the differential (40) in the final drive housing (38).

## Revendications

1. Véhicule avec un carter de transmission finale (38) en position transversale, qui permet d'entraîner des roues arrière, avec un moteur (14), qui présente un arbre de transmission (22) disposé sensiblement verticalement et sortant vers le sol, et avec un équipement de travail, qui accomplit des mouvements relatifs verticaux par rapport au véhicule (10) et peut être entraîné à partir de l'arbre de transmission (22) au moyen d'une courroie de transmission, **caractérisé** en ce que le moteur (14) est disposé au-dessus du carter de transmission finale (38) et le carter de transmission finale (38) est pourvu, dans sa région avant par rapport à la direction longitudinale du véhicule, d'un évidement (36) dans lequel sont reçues des parties, directement ou indirectement reliées à l'arbre de transmission (22), d'un disque d'entraînement (24) ou d'un embrayage (34).

2. Véhicule selon la revendication 1, **caractérisé** en ce que le carter de transmission finale (38) présente, dans sa région avant, un différentiel (40) en position excentrée et dont les arbres de roues (44) sortent latéralement du carter de transmission finale, et en ce que la région évidée (36) est prévue devant un des arbres de roues (44) et à côté du différentiel (40).

3. Véhicule selon la revendication 1, **caractérisé** en ce que la région évidée (36) est concentrique à l'arbre de transmission (22).

4. Véhicule selon la revendication 1, **caractérisé** en ce qu'un disque d'entraînement (24), monté sur l'arbre de transmission (22), est au moins partiellement reçu dans la région évidée (36) située à l'avant du carter de transmission finale (38).

5. Véhicule selon la revendication 1, **caractérisé** en ce qu'un embrayage (34), disposé sur l'arbre de transmission (22), est reçu dans la région évidée (36) du carter de transmission finale (38).

6. Véhicule selon la revendication 5, **caractérisé** en ce que le carter d'embrayage (48) est, par des moyens de fixation, assemblé de manière amovible au carter de transmission finale (38).

7. Véhicule selon la revendication 6, **caractérisé** en ce que le disque d'entraînement (24) est disposé au-dessus de l'embrayage (34) sur l'arbre de transmission (22) et l'embrayage (34) peut être tourné sur l'arbre de transmission (22) après avoir défait ses moyens de fixation, et en ce qu'un espace (62), permettant de déposer la courroie (20), est prévu entre l'embrayage (34) et le carter de transmission finale (38).

8. Véhicule selon l'une quelconque des revendications précédentes, **caractérisé** en ce qu'une poulie de courroie supplémentaire (28) est prévue au-dessus du disque d'entraînement (24).

9. Véhicule selon la revendication 5, **caractérisé** en ce que le disque d'entraînement (24) peut être relié en solidarité de rotation à l'arbre de transmission (22) par l'intermédiaire de l'embrayage (34), qui peut être actionné électriquement.

10. Véhicule selon la revendication 5, **caractérisé** en ce que le disque d'entraînement (24) est prévu en dessous de l'embrayage (34) sur l'arbre de transmission (22).

11. Véhicule selon l'une quelconque des revendications précédentes, **caractérisé** en ce qu'une boîte de vitesses (42) est prévue en arrière du différentiel (40) dans le carter de transmission finale (38), et elle peut être entraînée à partir de l'arbre de transmission (22) au moyen d'une courroie de transmission (30).
